Europäisches Patentamt

European Patent Office

Office européen des brevets

(19)

(11) Veröffentlichungsnummer: **0 265 821**
**A2**

(12) # EUROPÄISCHE PATENTANMELDUNG

(21) Anmeldenummer: 87115381.3

(22) Anmeldetag: 21.10.87

(51) Int. Cl.⁴: **H01M 10/40**

(30) Priorität: 27.10.86 DE 3636528

(43) Veröffentlichungstag der Anmeldung:
04.05.88 Patentblatt 88/18

(84) Benannte Vertragsstaaten:
**DE FR GB**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**

(54) **Elektrolyt für elektrochemische Zellen.**

(57) Die Erfindung betrifft ein Elektrolyten für elektrochemische Zellen, die mindestens 2 Elektroden enthalten, wobei mindestens eine Elektrode als aktives Elektrodenmaterial ein elektrochemisch oxidierbares und/oder reduzierbares Polymeres enthält, der ein organisches gegenüber den Elektroden indifferenten Lösungsmittel, eine ionische oder ionisierbare Verbindung als Leitsalz sowie eine 5-gliedrige heterocyclische Verbindung mit Stickstoff oder Schwefel als Heteroatom oder Anilin enthält enthält.

EP 0 265 821 A2

## Elektrolyt für elektrochemische Zellen

Die Erfindung betrifft einen Elektrolyten für elektrochemische Zellen, mit mindestens 2 Elektroden enthalten, wobei mindestens eine der Elektroden als aktives Elektrodenmaterial ein elektrochemisch, oxidierbares und/oder reduzierbares Polymeres enthält und der ein organisches Elektrolylösungsmittel und eine ionische oder ionisierbare Verbindung als Leitsalz enthält.

In der EP-A-36 118, EP-A-49 970, EP-A-50 441 sowie der EP-A-58 469 werden leichte Batterien hoher Energie-und Leistungsdichte beschrieben, die als elektrodenaktives Material der Kathode und/oder Anode ein elektrisch hochleitfähiges, p- oder n-dotiertes konjugiertes Polymer, insbesondere Polyacetylen oder Polypyrrole enthalten. Die konjugierten Polymeren lassen sich mit den im Elektrolyt enthaltenen ionischen oder ionisierbaren Verbindungen reversibel elektrochemisch dotieren und entdotieren und so in Abhängigkeit von dem Dotierungsgrad in verschiedene Oxidations-oder Reduktionsstufen überführen. In einer typischen und vorteilhaften Ausführungsform enthalten diese Batterien z.B. eine Lithium-Elektrode und eine Elektrode aus p-dotiertem Polypyrrol. Die Elektrolytsalze, wie z.B. Lithiumperchlorat, sind vorzugsweise in organischen Elektrolytlösungsmitteln gelöst. Als Elektrolytlösungsmittel sind insbesondere lineare und cyclische Ether, wie Ethylenglykoldimethylether, Diethylenglykoldimethylether, festes Polyethylenoxid, Tetrahydrofuran oder Dioxan, Propylencarbonat, Lactone wie z.B. gamma-Butyrolacton, Sulfone, wie z.B. Sulfolan oder substituierte Sulfolane, oder organische Sulfite wie Dimethylsulfit geeignet.

Es ist bislang noch nicht gelungen, elektrochemische Zellen auf Basis elektrisch leitfähiger dotierter konjugierter Polymere herzustellen, die allen von der Praxis an die Zellen gestellten Anforderungen genügen. So zeigen diese Zellen vielfach eine unerwünschte Selbstentladung, die ihre Lagerstabilität stark beeinträchtigt. Ebenso ist die Cyclenfestigkeit, d.h. die Zahl der möglichen Auflade-und Entlade-Vorgänge bei Sekundärelementen, häufig noch nicht zufreidenstellend. Bei hohen Cyclenzahlen lassen Energie-und Leistungsdichte dieser Zellen teilweise stark und irreversibel nach. Viele der Mangelerscheinungen dieser Zellen stehen im Zusammenhang mit dem verwendeten Elektrolytsystem.

Aufgabenstellung der vorliegenden Erfindung ist es einen Elektrolyt für elektrochemische Zellen aufzuzeigen, die mindestens 2 Elektroden enthalten, wobei mindestens eine der Elektroden als aktives Elektrodenmaterial als elektrochemisch oxidierbares und/oder reduzierbares Polymeres enthält, der ein organisches, gegenüber den Elektroden indifferentes Lösungsmittel und eine ionische oder ionisierbare Verbindung als Leitsalz enthält. Der Elektrolyt soll eine hohe Zyklenzahl bei hoher Zyklenstabilität ermöglichen, d.h. auch nach wiederholter End-und Wiederaufladung soll dazu entnehmende Strom und die Zellspannung sich nicht wesentlich ändern und des Elektrodenmaterial nicht abgebaut werden.

Es wurde nun gefunden, daß diese Aufgabe gelöst wird, wenn der Elektrolyt außerdem eine 5-gliedrige heterocyclische Verbindung mit Stickstoff oder Schwefel als Heteroatom oder Anilin enthält.

Die erfindungsgemäßen Elektrolyte, enthalten Lösungsmittel, wie sie unter anderem in der EP-A-36 118, der EP-A-49 970 oder der EP-A-58 469 beschrieben sind. Als Beispiele für solche anderen üblichen organischen Elektrolytlösungsmittel seien genannt: Dimethoxiethan, Diethylenglykoldimethylether, Tetrahydrofuran und dessen Derivat, Propylencarbonat, gamma-Butyrolacton und dessen Derivate, N-Methylpyrrolidon, Acetonitril, Dimethylformamid, Dimethylsulfoxid, Sulfolan und dessen Derivate, Ethylensulfit und dimethylsulfit. Bevorzugt sind also die aprotischen Lösungsmittel. Die eingesetzten Elektrolytlösungsmittel sollen gegenüber den Elektroden-Materialien indifferent und in dem Spannungsbereich, in dem die elektrochemische Zelle beschrieben wird, gegenüber chemischer Zersetzung stabil sein.

Die erfindungsgemäßen Elektrolytsysteme enthalten in dem Lösungsmittel mindestens eine ionische oder ionisierbare Verbindung gelöst oder suspendiert, die insbesondere als Leitsalz beim Betrieb einer elektrochemischen Zelle dem Stromtransport innerhalb der Zelle dient. Vorzugsweise ist die ionische oder ionsierbare Verbindung - im folgenden der Einfachheit halber als Leitsalz bezeichnet - zumindest teilweise, insbesondere aber vollkommen in dem Elektrolytlösungsmittel gelöst. Das Elektrolytlösungsmittel verleiht dabei den Ionen des Leitsalzes beim Betrieb der elektrochemischen Zelle oder Batterie eine hohe Ionenbeweglichkeit, so daß die elektrochemischen Zellen in aller Regel nicht nur entladen, sondern auch wieder aufgeladen werden können. Dabei ist allerdings zu beachten, daß hierzu der Elektrolyt in an sich bekannter und üblicher Weise so beschaffen sein muß, daß die reversibele Oxidation und/oder Reduktion der als Elektrodenmaterial eingesetzten elektrisch leitfähigen Polymeren gewährleistet ist, ohne daß hierdurch Elektrodenmaterial oder Elektrolyt irreversibel dem Batteriesystem entzogen werden. Die Leitsalze sind in dem Elektrolytlösungsmittel im allgemeinen in Mengen von etwa 0,01 bis 2 Mol pro Liter Lösungsmittel enthalten.

Als Leitsalze für den Elektrolyten kommen die für elektrochemische Zellen oder Batterien der in Rede stehenden Art bekannten und in der Literatur beschriebenen ionischen oder ionisierbaren Verbindungen der Alkali-oder Erdalkalimetalle in Betracht. Hierzu gehören insbesondere die Salze mit Perchlorat-, Tetrafluoroborat-, Hexafluoroarsenat-, Hexafluoroantimonat oder Hexafluorophosphat-Anionen. Des weiteren gut geeignet sind Salze von Sulfonsäuren, insbesondere von gegebenenfalls mit Alkyl-und/oder Nitrogruppen substituierten aromatischen Sulfonsäuren, insbesondere Benzolsulfonate oder Tosylate, aber auch Fluorosulfonate, wie z.B. Trifluoromethansulfonat. Als Kationen für die Leitsalze kommen insbesondere die Alkalimetall-Kationen, vorzugsweise $Li^+$, $Na^+$ oder $K^+$, in Betracht. Weitere sehr gut geeignete Kationen für die Leitsalze sind auch Erdalkalisalze und Tetraalkammoniumionen, vorzugsweise Tetraalkylammoniumionen, vorzugsweise Tetrabutylammonium, Tetraethylammonium oder Tetramethylammonium.

Wenn die negative Elektrode in den elektrochemischen Zellen aus einem Metall mit hohem Oxidationspotential, insbesondere einem Alkalimetall besteht, ist vorzugsweise, insbesondere im Fall von Sekundärelementen, das Leitsalz ein Salz des die negative Elektrode bildenden Metalls. Enthalten beispielsweise die elektrochemischen Zellen als negative Elektrode Lithium-Metall oder Lithium-Legierungen, so werden als Leitsalze insbesondere Lithiumsalze, vorzugsweise das Perchlorat, Tetrafluoroborat, Hexafluoroarsenat, Hexafluoroantimonat oder Hexafluorophosphat, eingesetzt.

Der Elektrolyt kann ein oder auch mehrere Leitsalze in Mischung miteinander enthalten.

Zu den geeigneten und bevorzugten Leitsalzen für die erfindungsgemäßen Elektrolyte gehören unter anderem: Lithiumperchlorat, Natriumperchlorat, Lithiumtetrafluoroborat, Natriumtetraphenylborat, Lithiumhexafluoroarsenat, Lithiumhexafluoroantimonat, Lithiumhexafluorophoshat und andere.

Die erfindungsgemäßen Elektrolyte enthalten außerdem eine 5-gliedrige heterocyclische Verbindung mit Stickstoff oder Schwefel als Heteroatom die konjugierte Doppelbindungen enthalten oder Anilin. Solche Verbindungen sind beispielsweise Verbindungen aus der klasse des Pyrrols, wie substituierte Pyrrole oder Verbindungen aus der Klasse des Thiophens. Verbindungen dieser Art werden weiter unten genannt bei der Beschreibung der Elektroden aus oxidierbaren und/oder reduzierbaren Polymeren. Der Elektrolyt soll zweckmäßig 0,1 bis 10 Mol/1 der heterocyclischen Verbindung oder des Anilins enthalten.

Nach einer bevorzugten Ausführungsform sind die Monomeren nur im Anodenraum enthalten.

Die erfindungsgemäßen Elektrolyte werden in elektrochemischen Zellen verwendet, die als elektrodenaktives Material mindestens einer Elektrode ein elektrochemisch, vorzugsweise reversibel oxidierbares und/oder reduzierbares Polymers, welches im oxidierten und/oder reduzierten Zustand eine elektrische Leitfähigkeit größer $10^2 \text{omega}^{-1}\text{cm}^{-1}$, insbesondere gleich oder größer $10^0 \text{omega}^{-1}\text{cm}^{-1}$ besitzt. Hierzu gehören insbesondere die p-oder n-dotierten bzw. die elektrochemisch p-oder n-dotierbaren konjugierten Polymeren.

Unter konjugierten Polymeren werden dabei solche Polymeren verstanden, die konjugierte ungesättigte Bindungen entlang ihrer Polymerhauptkette aufweisen. Hierzu gehören alle bekannten dotierten oder dotierbaren konjugierten Polymeren, die elektrochemisch oxidierbar und/oder reduzierbar sind, wie sie in der Literatur und insbesondere der EP-A-36 118, der EP-A-49 970 sowie der EP-A-58 469, beschrieben sind.

Aus der Gruppe der dotierten bzw. dotierbaren konjugierten Polymeren sind als elektrodenaktives Material unter anderem die Acetylenpolymerisate bevorzugt, wozu insbesondere Polyacetylen selbst, aber auch die bekannten substituierten Polyacetylene oder Acetylen-Copolymerisate gehören.

Unter den dotierten, elektrochemisch oxidierbaren konjugierten Polymeren haben sich insbesondere auch die Pyrrolpolymeren sehr vorteilhaft als Elektrodenmaterial erwiesen. Zu den Pyrrol-Polymeren gehören ganz allgemein die Homo-und Copolymeren von Verbindungen aus der Klasse der Pyrrole. Verbindungen aus dieser Klasse sind einmal das Pyrrol selbst, sowie auch die substituierten Pyrrole, insbesondere die an den C-Atomen monoalkyl-, dialkyl-, monohalogen-oder dihalogensubstituierten Pyrrole. Bevorzugt sind die Homopolymeren des unsubstituierten Pyrrols selbst, sowie die Copolymeren des unsubstituierten Pyrrols mit substituierten Pyrrolen und/oder anderen Comonomeren. Als andere Comonomere kommon dabei z.B. Cyclopentadien, Azulen und dessen Derivate, Fulven, Inden oder auch Quadratsäure in Betracht. Ferner eignen sich als Comonomere auch andere heterocyclische Verbindungen, wie Imidazol, Thiazol, Furan, Thiophen, 2-Bromthiophen, 2,6-Dimethylpyridin oder Pyrazin. Die Pyrrol-Polymeren sind bereits von ihrer Herstellung her, die im allgemeinen elektro chemisch durch anodische Oxidation der Monomeren erfolgt, p-leitende Verbindungen mit elektrischen Leitfähigkeiten im allgemeinen im Bereich von $10^{0-} \text{omega}^{-1}\text{cm}^{-1}$. Im

übrigen sind die für Elektrodenmaterialien und elektrochemische Elemente geeigneten Pyrrolpolymeren als solche bekannt und in der Literatur hinreichend beschrieben.

Neben den dotierten und/oder elektrochemisch dotierbaren bzw. entdotierbaren konjugierten Polymeren haben sich als aktives Elektrodematerial insbesondere auch solche elektrisch leitfähigen Polymeren mit einer elektrischen Leitfähigkeit größer als $10^{-2}$ omega$^{-1}$ cm$^{-1}$ als besonders vorteilhaft erwiesen, die elektrochemisch oxidierbare und/oder reduzierbare Gruppen mit definierter Struktur eingebaut enthalten, Zu dieser Klasse von Redox-Polymeren gehören beispielsweise Poly-(chinonimine) oder Poly(chinondiimine) Polyindigo Analoge des Polyindigos oder Polyindophenine. Bevorzugt ist Polyanilin wie Anilinschwarz.

Die elektrisch leitfähigen, elektrochemisch oxidierbaren und/oder reduzierbaren Polymeren können in jeder beliebigen geeigneten Form als aktives Elektrodenmaterial in den erfindungsgemäßen elektrochemischen Zellen oder Batterien eingesetzt werden.

Die erfindungsgemäßen Elektrolyte werden in elektrochemischen Zellen verwendet, die mindestens zwei Elektroden, d.h. mindestens eine positive Elektrode (Kathode) und mindestens eine negative Elektrode (Anode) haben. Dabei wird das aktive Elektrodenmaterial mindestens einer dieser Elektroden, d.h. also der Kathode und/oder der Anode aus den elektrisch leitfähigen, elektrochemisch oxidierbaren und/oder reduzierbaren Polymeren gebildet. Die Kathode kann aus jedem geeigneten und an sich bekannten Kathodenmaterial bestehen. Hierfür kommen insbesondere Metalle in Betracht, deren Oxidationspotential unter dem des für das anodenaktive Material verwendeten Polymeren liegt. Metalle, die sich in diesem Fall bevorzugt als Kathoden-Material eignen, sind z.B. Platin, Palladium, Gold, Silber, Nickel, Titan und dergleichen. Als Kathode kann aber auch z.B. eine Kohlenstoffelektrode verwendet werden. Zweckmäßig sind die Elektrodenräume durch Membranen oder Diaphragmen getrennt.

Die erfindungsgemäßen Elektrolyte für elektrochemischen Zellen zeichnen sich durch hohe Zyklisierbarkeit und geringe Selbstentladung der Zellen aus. Solche Zellen sind insbesondere als Sekundärelemente verwendbar, wobei ihre Eigenschaften selbst nach einer sehr hohen Anzahl von Wiederauffladevorgängen im wesentlichen unverändert und konstant sind. Primäre Batterien mit den erfindungsgemäßen Elektrolyten zeichnen sich durch eine geringe Selbstentladung aus, so daß deren Kapazität über einen längeren Zeitraum enthalten bleibt.

Die Erfindung wird durch die nachfolgenden Beispiele näher erläutert. Die in den Beispielen angegebenen Teile und Prozente beziehen sich, sofern nicht anders vermerkt, auf das Gewicht.

Beispiel 1

a) (Vergleichsversuch) Eine elektrochemische Zelle enthält als Anode eine Polypyrrolfolie von 100 μm Dicke die 30 Gew.-% C10$^{4-}$ als Gegenion enthält. Die Folie hat ein Gewicht von 100 mg. Die Zelle enthält als Kathode ein Platinblech, das in 2 cm Entfernung von der Anode angeordnet ist. Die Elektrolysenzelle enthält als Elektrolyt eine Lösung von 0,5 Mol LiC10$_4$ in Propylencarbonat. Es wird aus der Zelle für die Dauer von 60 Min. bei einer Stromdichte von 2 mAmp/cm Strom entnommen. Danach hat sich aus der Anode Anteilen gelöst die 50 Gew.-% ihres Gewichtes betragen. Die Anode hat sich außerdem versprödet.

b) (Erfindungsgemäß) Arbeitet man wie unter a) beschrieben und setzt den Elektrolyten 0,6 Mol Pyrrol zu und kann im gleichen Zeitraum die gleiche Energiemenge der Zelle entnommen werden, wobei kein Gewichtsverlust der Anode eintritt. Die Konsistenz der Anode verändert sich nicht. In beiden Fällen (a und b) sind Kathoden-und Anodenraum durch ein Diaphragma getrennt.

Analoge wie Pyrrol wirken Zusätze von N-Methylpyrrol, Thiophen oder Anilin.

Beispiele 2 - 4

Es wird wie in Beispiel 1 b) gearbeitet jedoch in den Anodenraum (2) 0,1 Mol Methylthiophen oder (3) 0,1 Mol Bisthiophen oder (4) 0,1 Mol Anilin zugesetzt so wird allen Fällen beim Abbau der Anode beobachtet.

**Ansprüche**

1. Elektrolyt fér elektrochemische Zellen, die mindestens 2 Elektroden enthalten, wobei mindestens eine Elektrode als aktives Elektrodenmaterial ein elektrochemisch oxidierbares und/oder reduzierbares Polymeres enthält, der ein organisches gegenüber den Elektroden indifferentes Lösungsmittel und eine ionische oder ionisierbare Verbindung als Leitsalz enthält, dadurch gekennzeichnet, daß der Elektrolyt außerdem eine 5-gliedrige heterocyclische Verbindung mit Stickstoff oder Schwefel als Heteroatom oder Anilin enthält.

Elektrolyt nach Anspruch 1, dadurch gekennzeichnet, daß 0,1 bis 2,0 Mole/1 der heterocyclischen Verbindung oder des Anilins enthalten sind.